# EUROPEAN PATENT APPLICATION

(11) **EP 4 726 546 A1**
(43) Date of publication of application: **15.04.2026**
(21) Application number: 25206356.5
(22) Date of filing: 02.10.2025
(51) Int. Cl.: G06F 9/48, G06F 11/34, G06F 9/50

(54) **ACTIVITY-AWARE PERFORMANCE AND POWER MODELS FOR TASK SCHEDULING ON HETEROGENEOUS MULTIPROCESSORS**

(30) Priority: 14.10.2024 US 202463706784 P; 07.03.2025 US 202519074232
(71) Applicant: MEDIATEK INC., Hsinchu City 30078 (TW)
(72) Inventor: TSAI, Tsung-Yu, 30078 Hsinchu City (TW); CHANG, Ya-Ting, 30078 Hsinchu City (TW); HSIEH, Wen-Wen, 30078 Hsinchu City (TW); LAI, Chien-Yuan, 30078 Hsinchu City (TW); LIU, Kun-Hao, 30078 Hsinchu City (TW)
(74) Representative: Haseltine Lake Kempner LLP

(57) **Abstract**

Task scheduling is performed based on activity indexes collected in a heterogeneous multiprocessor computing system. Both per-task activity indexes and per-processor activity indexes include non-stall time of task execution and a corresponding processor operating point (OPP), and stall time of memory access and a corresponding memory OPP. The non-stall time and the stall time are scaled based on at least the corresponding processor OPP and the corresponding memory OPP, respectively. The system uses using the scaled non-stall time and the scaled stall time to estimate capacity and dynamic power of each processor when assigned a given task at a given processor OPP and a given memory OPP. The load demand of the given task is also estimated. A task scheduler assigns the given task to a target processor and requests memory resources for executing the given task to satisfy power and performance criteria.

## Description

### CROSS-REFERENCE TO RELATED APPLICATIONS

This application claims the benefit of U.S. Provisional Application No. 63/706,784 filed on October 14, 2024, the entirety of which is incorporated by reference herein.

### TECHNICAL FIELD

Embodiments of the invention relate to task scheduling based on activities of heterogeneous multiprocessors and tasks executed thereon.

### BACKGROUND OF THE INVENTION

A modern computer system typically includes a task scheduler to dispatch tasks at runtime to processors to satisfy performance and/or power requirements. Many conventional techniques for estimating performance and power are based on static assumptions that do not account for varying workloads and dynamic hardware environments in the real world. For example, some conventional techniques may assume that all tasks have the same behavior during execution. Some conventional techniques may use power tables built from benchmark measurements that are not adaptable to the dynamic hardware environments.

The gap between static assumptions and real-world demand leads to over-management or under-management of system resources. The former causes power waste and the latter causes performance degradation. Thus, there is a need for improving task scheduler techniques.

### SUMMARY OF THE INVENTION

In one embodiment, a method is provided for performing task scheduling in a heterogeneous multiprocessor computing system. The method includes collecting activity indexes including per-task activity indexes of a plurality of tasks and per-processor activity indexes of a plurality of processors. Both the per-task activity indexes and the per-processor activity indexes include non-stall time of task execution and a corresponding processor operating point (OPP), and stall time of memory access and a corresponding memory OPP. The method further includes scaling the non-stall time and the stall time based on at least the corresponding processor OPP and the corresponding memory OPP, respectively, to produce scaled non-stall time and scaled stall time at a given processor OPP and a given memory OPP, respectively; using both the scaled non-stall time and the scaled stall time to estimate capacity and dynamic power of each processor when assigned a given task at the given processor OPP and the given memory OPP; and estimating a load demand of the given task. The method further includes assigning the given task to a target processor and requesting memory resources for executing the given task to satisfy power and performance criteria based on the activity indexes, the capacity, the dynamic power, and the load demand.

In another embodiment, a system of heterogeneous multiprocessors is provided to perform task scheduling. The system includes processors and memory devices coupled to the processors. The processors are operative to perform the aforementioned method.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 is a block diagram illustrating a system that performs activity-aware for task scheduling according to one embodiment.
FIG. 2 is a diagram illustrating processor states according to one embodiment.
FIG. 3 is a diagram illustrating a processor's activities according to one embodiment.
FIG. 4 is a block diagram illustrating a task scheduling module according to one embodiment.
FIG. 5 is a flow diagram illustrating a method for task scheduling according to one embodiment.
FIG. 6 is a block diagram illustrating a system operative to perform task scheduling according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

In a computer system, the execution speed and power consumption of a task are highly dependent on the workload incurred by the task, the behaviors of other tasks that are executed at the same time, and the hardware environment such as the types of processor and memory, the speed of the processor and the memory, etc. Embodiments of the invention provide a task scheduler that takes into account different behaviors of different tasks and the hardware environment in which these tasks are executed. In one embodiment, the hardware environment is a heterogeneous multiprocessor system, which includes multiple processors that share the same instruction set architecture (ISA) but with different performance and power characteristics. As used herein, the term "processor" may also be referred to as a processor core or a core.

In one embodiment, the system includes an activity monitor to collect the statistics of the activities of each processor and each task executed thereon. The activity monitor outputs a set of activity indexes for each processor and a set of activity indexes for each task periodically at runtime. A task may run on a processor for a time period and becomes inactive. When the task wakes up to run again, the task scheduler may assign that task to the same processor or a different processor. The operations of the task scheduler will be described in further detail below.

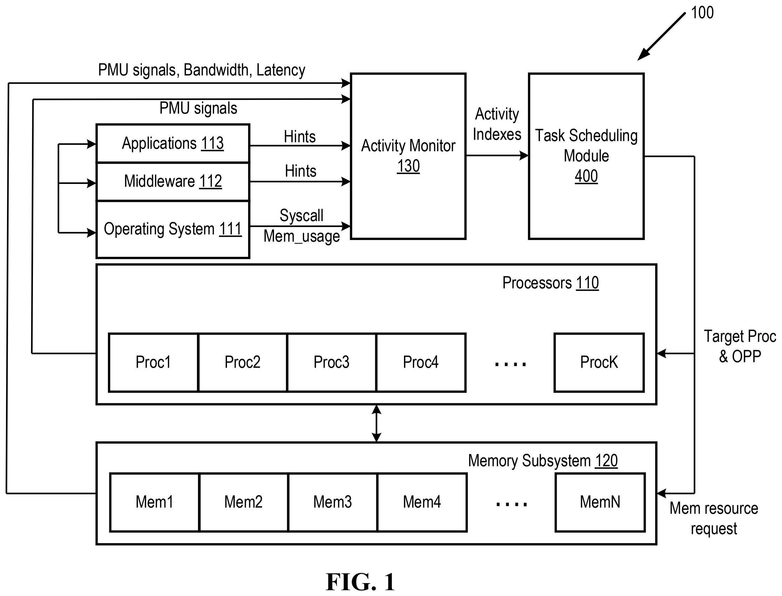

FIG. 1 is a block diagram illustrating a system 100 that performs activity-aware task scheduling according to one embodiment. The system 100 includes multiple heterogeneous processors 110 coupled to a memory subsystem 120. The processors 110 (e.g., Proc1, Proc2, ..., ProcK) have different performance and power characteristics. The memory subsystem 120 includes multiple memory devices (e.g., Mem1, Mem2, ..., MemN) such as caches (e.g., L1, L2, L3 caches), a main memory (e.g., dynamic random-access memory (DRAM)), and other memory devices at multiple levels of the memory hierarchy. Some or all of the memory devices may each have a corresponding memory controller. The system 100 runs an operating system 111 to manage hardware and software in the system 100 and provide system-level services to middleware 112 and applications 113. In one embodiment, the system 100 also includes a dynamic voltage frequency scaling (DVFS) controller to control the voltage and operating frequency of each processor 110, and a performance management unit (PMU) to collect data on the system's hardware operations.

In one embodiment, the system 100 includes an activity monitor 130 to collect and log the activities of each processor 110 and each task. The activity monitor 130 receives information from both hardware and software in the system 100. In one embodiment, the activity monitor 130 may receive real-time signals from the PMU indicating hardware information such as activities of the processors 110 and memory in the memory subsystem 120. The activity monitor 130 may receive software hints from the middleware 112 and/or the applications 113. The activity monitor 130 may further receive, from the operating system 111, system information such as the types and numbers of system calls, memory usage, etc.

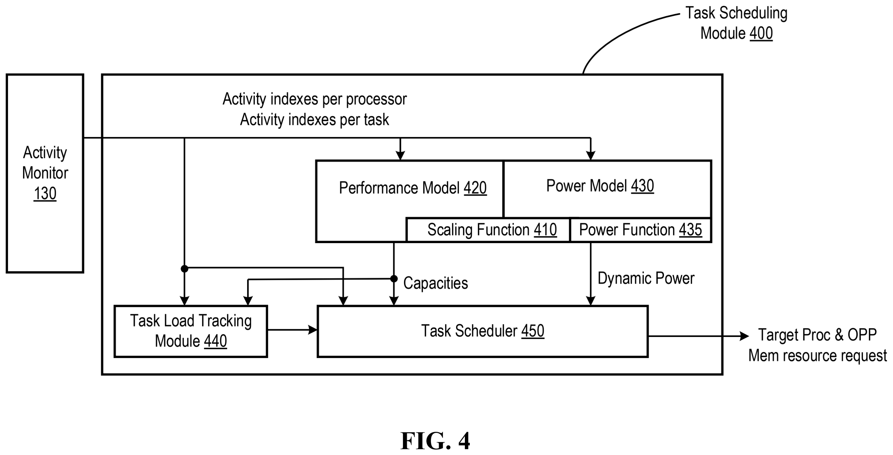

The system 100 also runs a task scheduling module 400 to perform task scheduling. Each of the tasks may be executed by any of the processors 110. The task scheduling module 400 is responsible for assigning a given task to one of the processors 110 to satisfy or optimize one or more performance and power criteria, e.g., minimizing the dynamic power consumption while maintaining the system performance above a predetermined threshold. After the task scheduling module 400 determines a task assignment, it sends a signal to the processor receiving the assignment (referred to as the "target processor"), requesting the task be run at a given operating frequency (i.e., an operating point (OPP)). The task scheduling module 400 may also request memory resources for the task. More details on the task scheduling module 400 will be provided with reference to FIG. 4 below.

In one embodiment, the activity monitor 130 sends the collected information to the task scheduling module 400 in the form of per-processor activity indexes and per-task activity indexes. The activity monitor 130 may receive real-time signals from the PMU, where the signals indicate, among others, the non-stall time and the stall time of each task during task execution, the non-stall time and the stall time of each processor, the OPP of the processor during task executing, and the OPP of the memory accessed for task execution. The OPP of a processor is referred to as the "processor OPP") and the OPP of a memory device is referred to as the "memory OPP". In one embodiment, the activity monitor 130 may also receive the instruction type of each activity of each executed task from the PMU, the software, or another source. In one embodiment, the activity monitor 130 may also receive memory bandwidth and latency information from the memory subsystem 120 with respect to the memory devices accessed for task execution.

It is noted that a processor may access multiple memory devices when executing a task. Different memory devices may run at different memory OPPs and may have different bandwidths and different latencies. For ease of explanation, the following description uses one memory device as an example. It is understood that the task scheduling method and system described herein apply to or can be extended to a task that accesses multiple memory devices with different memory OPPs during task execution.

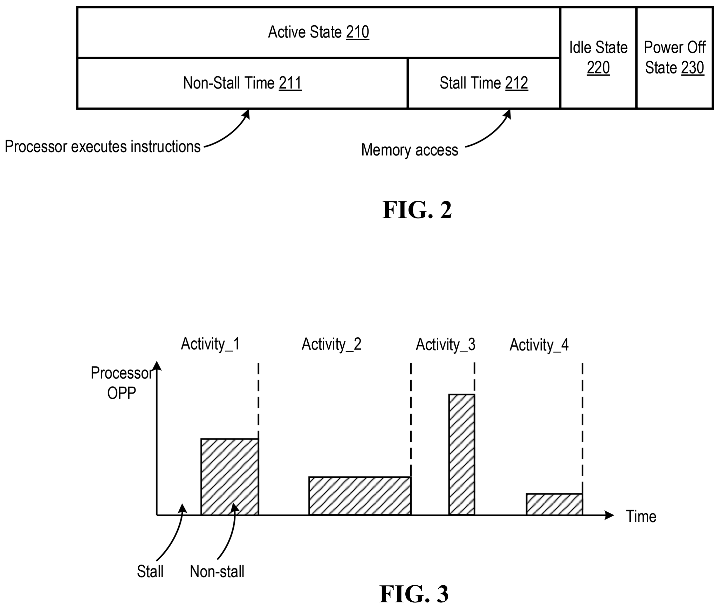

FIG. 2 is a diagram illustrating processor states according to one embodiment. During system runtime, each processor (of the processors 110 in FIG. 1) may be in one of the following states: an active state 210, an idle state 220 (also referred to as a low-power state), and a power-off state 230. The time that a processor spends in the active state 310 may include non-stall time 211 and stall time 212. The processor actively executes one or more tasks during the non-stall time 211, and is stalled by memory access during the stall time 212. The memory access may include access to one or more memory devices in the memory subsystem 120 (FIG. 1).

Before describing the task scheduling in further detail, it is helpful to explain the terms "activity", "per-processor activity indexes" and "per-task activity indexes". By tracking these activity indexes, the system can more accurately describe the capacity and power characteristics of each processor and each task at runtime, and enables a task scheduler to optimize task assignments to processors with respect to performance and power criteria. FIG. 3 is a diagram illustrating a sequence of activities according to one embodiment. The example in FIG. 3 may represent a processor's activities or a task's activities over a sequence of time periods, and each time period may or may not have the same time length. When representing a processor's activities, each time period in FIG. 3 includes an activity of the processor actively executing a task at a corresponding processor OPP during the non-stall time (represented by a slanted-lined block). In each time period, the processor's activity also includes memory access at a corresponding memory OPP during the stall time. The processor in each time period may execute more than one task. When representing a task's activities, each time period in FIG. 3 includes an activity of the task being actively executed by a processor during the non-stall time and stalled by memory access during the stall time. The task in different time periods may be executed by different processors. Furthermore, each activity, whether it is a processor's activity or a task's activity, may be associated with an instruction type, indicating the type of instruction being executed in the time period.

The term "per-processor activity indexes", as used herein, refers to a set of statistics that describes the activities of a processor during task execution. For example, in a sequence of time periods at runtime, a processor may execute one or more tasks in each time period and may execute the same task(s) or different tasks in different time periods. Each of these time periods contains an activity and includes the non-stall time and stall time. The non-stall time is the time that the processor spends on actively executing one or more tasks. The stall time is the time that the processor spends on waiting for resources, such as memory access. The per-processor activity indexes of a processor include, for each of these time periods, the non-stall time and the corresponding processor OPP, the stall time and the corresponding memory OPP for memory accessed by the processor. When multiple memory devices are accessed, the stall time may correspond to multiple memory OPPs, each for a memory device.

The term "per-task activity indexes", as used herein, refers to a set of statistics that describes the activities of a task during task execution. For example, in a sequence of time periods at runtime, a task may be executed by a processor in each of the time periods. Each of these time periods contains an activity and includes non-stall time and stall time. The non-stall time is the time that the task spends on being executed by a processor. The stall time is the time that the task spends on memory access. The task may be executed on the same processor or different processors in different time periods. The per-task activity indexes of a task include, for each of these time periods, the non-stall time and the OPP of the processor executing the task, the stall time and the OPP of the memory accessed for executing the task. When multiple memory devices are accessed, the stall time may correspond to multiple memory OPPs, each for a memory device.

In one embodiment, both the per-processor activity indexes and the per-task activity indexes may further include the types of instructions being executed in each time period. Nonlimiting examples of instruction types may include: floating-point operations, integer operations, data transfer operations, control transfer operations, etc. In one embodiment, both the per-processor activity indexes and the per-task activity indexes may further include the memory bandwidth and/or memory latency for each activity.

FIG. 4 is a block diagram illustrating the task scheduling module 400 according to one embodiment. The task scheduling module 400 receives per-processor activity indexes and per-task activity indexes from the activity monitor 130, and assigns tasks to respective target processors (e.g., the processors 110 in FIG. 1). Both the per-processor activity indexes and the per-task activity indexes describe the non-stall time and the stall time in each time period of a sequence of past time periods at runtime.

The task scheduling module 400 includes a performance model 420 to estimate the performance (e.g., capacity) of a processor when executing a given task at a given processor OPP and a given memory OPP. In one embodiment, the capacity of a processor may be measured by million instructions per second (MIPS). The capacity estimation is based on the activity indexes of the processor and the given task. The performance model 420 uses scaling function 410 to scale the non-stall time and the stall time in the activity indexes. The scaling function 410 outputs the scaled non-stall time by scaling the non-stall time according to the executing processor's OPP and the types of instructions executed. The scaling function 410 outputs the scaled stall time by scaling the stall time according to the accessed memory's OPP, the types of instructions accessing the memory, and the memory's bandwidth. For example, the non-stall time scales inversely with the processor OPP and the stall time scales inversely with the memory OPP. That is, the non-stall time increases when the processor OPP decreases, and vice versa. The stall time increases when the memory OPP decreases, and vice versa.

The performance model 420 uses the scaled non-stall time and the scaled stall time, in combination with a processor's reference capacity (e.g., the capacity at the maximum processor OPP and maximum memory OPP), to estimate the capacity of the processor when executing a given task at a given processor OPP and a given memory OPP. In one embodiment, the performance model 420 outputs an estimated capacity of each processor that includes the non-stall time capacity at a given processor OPP (using the scaled non-stall time) and the stall time capacity at a given memory OPP (using the scaled stall time). As the processors are heterogeneous, different processors may have different capacities at the same OPP when executing the same task.

The task scheduling module 400 further includes a power model 430 to estimate the dynamic power consumption caused by assigning a given task to a processor at a given processor OPP and a given memory OPP. When a processor is currently running multiple tasks, this dynamic power is the power consumed by adding the given task to the processor. In one embodiment, the dynamic power estimation uses a power function 435 and the scaling function 410 to estimate the non-stall time power at the given processor OPP and the stall time power at the given memory OPP. The scaling takes into account that different circuits are active in different processor states. For example, the processor's execution pipeline is active during the non-stall time, and one or more memory controllers are active during the stall time. In one embodiment, the power model 430 calculates the processor's non-stall time power consumption by scaling a first reference power with the processor OPP and the instruction type, and the stall time power consumption by scaling a second reference power with the memory OPP and the instruction type, where the first reference power and the second reference power may be the maximum processor OPP and the maximum memory OPP, respectively.

In one embodiment, the power model 430 may calculate the energy consumption when a given task is assigned to a processor at a given processor OPP and a given memory OPP. The energy is calculated as the sum of the non-stall time power multiplied by the scaled non-stall time and the stall time power multiplied by the scaled stall time, where the scaled times are calculated based on at least the processor OPP, the memory OPP, and the instruction type. The power model 430 may output the estimated dynamic power (or energy) of each processor for executing the given task at a corresponding processor OPP and a corresponding memory OPP. As the processors are heterogeneous, different processors may consume different amounts of power at the same OPP when executing the same task. The outputs of the performance model 420 and the power model 430 are used by a task scheduler 450 to determine whether a task assignment to a target processor can satisfy performance and power requirements.

The task scheduling module 400 further includes a task load tracking module 440, which, for a given task, predicts the task's load demand in the next time period based on the task's execution activities in the past. The task load tracking module 440 receives the activity indexes from the activity monitor 130 and the output of the performance model 420. In one embodiment, a task's load demand in the next time unit can be calculated as the weighted sum of the workload incurred by the task in each of the past N time units. The weight in each past time unit includes at least a down-weighting factor to gradually discount the task's load as the time passes. The task load in a past time unit is the capacity of the processor executing the task in that time unit scaled by a factor that includes the scaled non-stall time and the scaled stall time. In one embodiment, a reference capacity such as the processor's maximum capacity at the maximum processor OPP can be used in the calculation of the task load. For example, the task load in a past time unit may be calculated as: (the maximum capacity) divided by (the scaled non-stall time plus the scaled stall time in the past time unit). The scaled non-stall time may be the non-stall time scaled by the ratio of the maximum processor OPP to the processor OPP in that past time unit, and the scaled stall time may be the stall time scaled by the ratio of the maximum memory OPP to the memory OPP in that past time unit. The output of the task load tracking module 440 predicts a given task's load demand, which is used by the task scheduler 450 to identify a target processor having the capacity to execute the given task.

The task scheduler 450 receives inputs including the per-processor and per-task activity indexes from the activity monitor 130, the estimated capacities from the performance model 420, the estimated dynamic power from the power model 430, and the predicted task load from the task load tracking module 440. Based on these inputs, the task scheduler 450 identifies a target processor that has the capacity to execute a given task, and also identifies the processor OPP and the memory OPP to satisfy performance and/or energy criteria. For example, a performance and energy criterion may be to minimize the computer system's energy consumption while maintaining the performance above a threshold.

In one embodiment, the task scheduler 450 may calculate the bandwidth, the latency, and the memory OPP(s), and request the memory subsystem 120 (FIG. 1) for memory resources to satisfy the request. The request may indicate respective ranges or thresholds for the bandwidth, the latency, and/or the memory OPP. For example, the request may indicate a requested range of the memory bandwidth and/or for a requested range of the memory latency. The request may be sent to respective memory controllers to set respective memory OPPs, bandwidth and/or latency for respective memory devices, where the memory devices are to be accessed by a target processor when executing a given task.

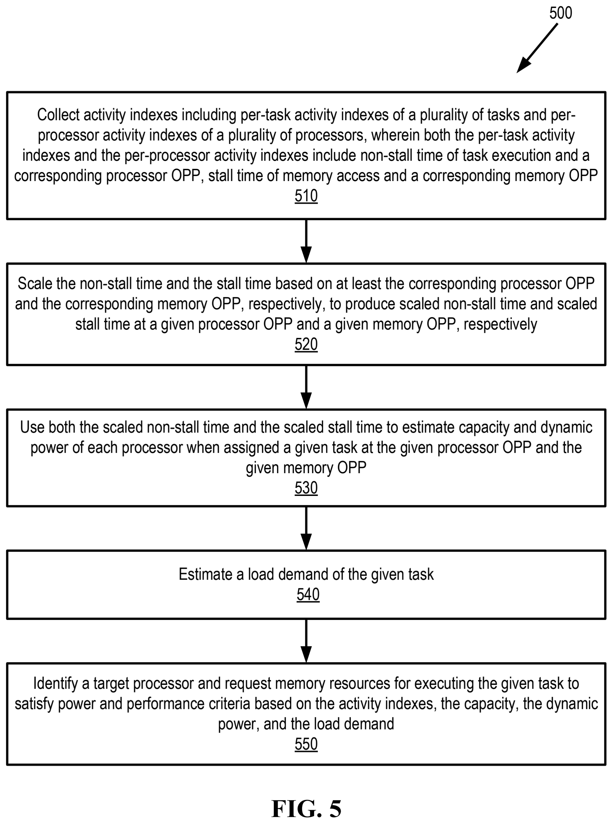

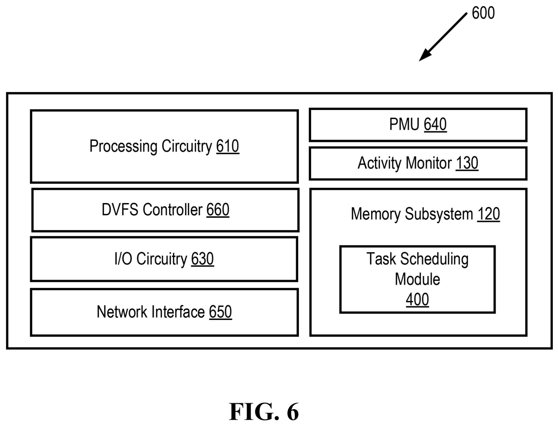

FIG. 5 is a flow diagram illustrating a method 500 for task scheduling in a heterogeneous multiprocessor computing system according to one embodiment. In one embodiment, the method 500 may be performed by a system such as the system 100 in FIG. 1 and/or a system 600 in FIG. 6.

The method 500 starts with step 510 when the system collects activity indexes including per-task activity indexes of a plurality of tasks and per-processor activity indexes of a plurality of processors. Both the per-task activity indexes and the per-processor activity indexes include non-stall time of task execution and a corresponding processor OPP, and stall time of memory access and a corresponding memory OPP. The system at step 520 scales the non-stall time and the stall time based on at least the corresponding processor OPP and the corresponding memory OPP, respectively, to produce scaled non-stall time and scaled stall time at a given processor OPP and a given memory OPP, respectively. The system at step 530 estimates capacity and dynamic power of each processor when assigned a given task at the given processor OPP and the given memory OPP. Each of the capacity and the dynamic power is calculated using both the scaled non-stall time and the scaled stall time. The system at step 540 estimates a load demand of the given task. The system at step 550 assigns the given task to a target processor and requests memory resources for executing the given task to satisfy power and performance criteria based on the activity indexes, the capacity, the dynamic power, and the load demand.

In one embodiment, the per-processor activity indexes of a processor indicate, for each time period in a plurality of time periods, the non-stall time of executing one or more tasks and the corresponding processor OPP and the stall time of access to one or more memory devices and corresponding memory OPPs. In one embodiment, the per-task activity indexes of the given task indicate, for each time period in a plurality of time periods, the non-stall time of the given task executed on a processor and the corresponding processor OPP and the stall time of access to one or more memory devices and corresponding memory OPPs. In one embodiment, both the per-task activity indexes and the per-processor activity indexes further include an instruction type of a given activity.

In one embodiment, scaling the non-stall time and the stall time is further based on an instruction type of a given activity of the given task. In one embodiment, estimating the capacity includes estimations of both non-stall time capacity at the given processor OPP and stall-time capacity at the given memory OPP. In one embodiment, estimating the dynamic power includes estimations of both non-stall time power at the given processor OPP and stall-time power at the given memory OPP.

In one embodiment, when a target processor is identified, the system may request the target processor to operate at a requested processor OPP. In one embodiment, when requesting the memory resources, the system may request a memory controller to set a memory device at a requested memory OPP, where the memory device is to be accessed by the target processor. The system may further request a memory controller one or both of: a requested range of memory bandwidth and a requested range of memory latency. In one embodiment, when estimating the load demand the system may scale a reference capacity of a processor executing the given task in a past time period by a factor that includes the scaled non-stall time and the scaled stall time.

FIG. 6 illustrates an example of a system 600 operative to perform task scheduling according to one embodiment. The system 600 is a heterogeneous multiprocessor computing system. The system 600 may be embodied in many form factors, such as a computer system, a gaming device, a smartphone, a mobile device, a handheld device, a wearable device, an entertainment system, and the like. The system 600 may be an example of the system 100 in FIG. 1. The system 600 includes processing circuitry 610, the memory subsystem 120, I/O circuitry 630, a network interface 650, a PMU 640, a DVFS controller 660, and the activity monitor 130. It is understood that the system 600 is simplified for illustration; additional hardware and software components are not shown.

The processing circuitry 610 includes multiple processors 110, such as multiple central processing units (CPUs) and/or multiple CPU cores. The processing circuitry 610 may further include a graphics processing unit (GPU), a neural processing unit (NPU), a deep learning accelerator (DLA), a digital signal processor (DSP), a multimedia processor, other general-purpose and/or special-purpose processing circuitry.

The memory subsystem 120 may include a dynamic random-access memory (DRAM) device, a static RAM (SRAM) device, a flash memory device, and/or other volatile or non-volatile memory devices. In one embodiment, the memory subsystem 120 stores a task scheduling module 400 to perform runtime task scheduling.

The operations of the flow diagram of FIG. 5 have been described with reference to the exemplary embodiments of FIG. 1 and FIG. 6. However, it should be understood that the operations of the flow diagram of FIG. 5 can be performed by embodiments of the invention other than the embodiments of FIG. 1 and FIG. 6, and the embodiments of FIG. 1 and FIG. 6 can perform operations different than those discussed with reference to the flow diagram. While the flow diagram of FIG. 5 shows a particular order of operations performed by certain embodiments of the invention, it should be understood that such order is exemplary (e.g., alternative embodiments may perform the operations in a different order, combine certain operations, overlap certain operations, etc.).

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

Embodiments of the invention are set out in the following numbered clauses:
Clause 1. A method of performing task scheduling in a heterogeneous multiprocessor computing system, comprising collecting activity indexes including per-task activity indexes of a plurality of tasks and per-processor activity indexes of a plurality of processors, wherein both the per-task activity indexes and the per-processor activity indexes include non-stall time of task execution and a corresponding processor operating point (OPP), and stall time of memory access and a corresponding memory OPP; scaling the non-stall time and the stall time based on at least the corresponding processor OPP and the corresponding memory OPP, respectively, to produce scaled non-stall time and scaled stall time at a given processor OPP and a given memory OPP, respectively;using both the scaled non-stall time and the scaled stall time to estimate capacity and dynamic power of each processor when assigned a given task at the given processor OPP and the given memory OPP; estimating a load demand of the given task; andassigning the given task a target processor and requesting memory resources for executing the given task to satisfy power and performance criteria based on the activity indexes, the capacity, the dynamic power, and the load demand.
Clause 2. The method of clause 1, wherein the per-processor activity indexes of a processor indicate, for each time period in a plurality of time periods, the non-stall time of executing one or more tasks and the corresponding processor OPP and the stall time of access to one or more memory devices and corresponding memory OPPs.
Clause 3. The method of clause 1, wherein the per-task activity indexes of the given task indicate, for each time period in a plurality of time periods, the non-stall time of the given task executed on a processor and the corresponding processor OPP and the stall time of access to one or more memory devices and corresponding memory OPPs.
Clause 4. The method of clause 1, wherein both the per-task activity indexes and the per-processor activity indexes further include an instruction type of a given activity, and scaling the non-stall time and the stall time is further based on the instruction type of the given activity.
Clause 5. The method of clause 1, wherein identifying the target processor further comprises: requesting the target processor to operate at a requested processor OPP.
Clause 6. The method of clause 1, wherein estimating the capacity includes estimations of both non-stall time capacity at the given processor OPP and stall-time capacity at the given memory OPP.
Clause 7. The method of clause 1, wherein estimating the dynamic power includes estimations of both non-stall time power at the given processor OPP and stall-time power at the given memory OPP.
Clause 8. The method of clause 1, wherein requesting the memory resources further comprises: requesting a memory controller to set a memory device at a requested memory OPP, wherein the memory device is to be accessed by the target processor.
Clause 9. The method of clause 1, wherein requesting the memory resources further comprises: requesting a memory controller one or both of: a requested range of memory bandwidth and a requested range of memory latency.
Clause 10. The method of clause 1, wherein estimating the load demand further comprises: scaling a reference capacity of a processor executing the given task in a past time period by a factor that includes the scaled non-stall time and the scaled stall time.
Clause 11. A system of heterogeneous multiprocessors operative to perform task scheduling, comprising: a plurality of processors; and a plurality of memory devices coupled to the processors, wherein the processors are operative to: collect activity indexes including per-task activity indexes of a plurality of tasks and per-processor activity indexes of the plurality of processors, wherein both the per-task activity indexes and the per-processor activity indexes include non-stall time of task execution and a corresponding processor operating point (OPP), and stall time of memory access and a corresponding memory OPP; scale the non-stall time and the stall time based on at least the corresponding processor OPP and the corresponding memory OPP, respectively, to produce scaled non-stall time and scaled stall time at a given processor OPP and a given memory OPP, respectively; use both the scaled non-stall time and the scaled stall time to estimate capacity and dynamic power of each processor when assigned a given task at the given processor OPP and the given memory OPP; estimate a load demand of the given task; and assign the given task to a target processor and request memory resources for executing the given task to satisfy power and performance criteria based on the activity indexes, the capacity, the dynamic power, and the load demand.
Clause 12. The system of clause 11, wherein the per-processor activity indexes of a processor indicate, for each time period in a plurality of time periods, the non-stall time of executing one or more tasks and the corresponding processor OPP and the stall time of access to one or more of the memory devices and corresponding memory OPPs.
Clause 13. The system of clause 11, wherein the per-task activity indexes of the given task indicate, for each time period in a plurality of time periods, the non-stall time of the given task executed on a processor and the corresponding processor OPP and the stall time of access to one or more of the memory devices and corresponding memory OPPs.
Clause 14. The system of clause 11, wherein both the per-task activity indexes and the per-processor activity indexes further include an instruction type of a given activity, and scaling the non-stall time and the stall time is further based on the instruction type of the given activity.
Clause 15. The system of clause 11, wherein, when identifying the target processor, the processors are further operative to: request the target processor to operate at a requested processor OPP.
Clause 16. The system of clause 11, wherein estimating the capacity includes estimations of both non-stall time capacity at the given processor OPP and stall-time capacity at the given memory OPP.
Clause 17. The system of clause 11, wherein estimating the dynamic power includes estimations of both non-stall time power at the given processor OPP and stall-time power at the given memory OPP.
Clause 18. The system of clause 11, wherein, when requesting the memory resources, the processors are further operative to:request a memory controller to set a memory device at a requested memory OPP, wherein the memory device is to be accessed by the target processor.
Clause 19. The system of clause 11, wherein, when requesting the memory resources, the processors are further operative to:request a memory controller one or both of: a requested range of memory bandwidth and a requested range of memory latency.
Clause 20. The system of clause 11, wherein, when estimating the load demand, the processors are further operative to: scale a reference capacity of a processor executing the given task in a past time period by a factor that includes the scaled non-stall time and the scaled stall time.

## Claims

1. A method of performing task scheduling in a heterogeneous multiprocessor computing system (100), comprising:
collecting (510) activity indexes including per-task activity indexes of a plurality of tasks and per-processor activity indexes of a plurality of processors, wherein both the per-task activity indexes and the per-processor activity indexes include non-stall time of task execution and a corresponding processor operating point, OPP, and stall time of memory access and a corresponding memory OPP;
scaling (520) the non-stall time and the stall time based on at least the corresponding processor OPP and the corresponding memory OPP, respectively, to produce scaled non-stall time and scaled stall time at a given processor OPP and a given memory OPP, respectively;
using (530) both the scaled non-stall time and the scaled stall time to estimate capacity and dynamic power of each processor when assigned a given task at the given processor OPP and the given memory OPP;
estimating (540) a load demand of the given task; and
assigning (550) the given task a target processor and requesting memory resources for executing the given task to satisfy power and performance criteria based on the activity indexes, the capacity, the dynamic power, and the load demand.

2. The method of claim 1, wherein the per-processor activity indexes of a processor indicate, for each time period in a plurality of time periods, the non-stall time of executing one or more tasks and the corresponding processor OPP and the stall time of access to one or more memory devices and corresponding memory OPPs.

3. The method of claim 1 or claim 2, wherein the per-task activity indexes of the given task indicate, for each time period in a plurality of time periods, the non-stall time of the given task executed on a processor and the corresponding processor OPP and the stall time of access to one or more memory devices and corresponding memory OPPs.

4. The method of any one of claims 1 to 3, wherein both the per-task activity indexes and the per-processor activity indexes further include an instruction type of a given activity, and scaling the non-stall time and the stall time is further based on the instruction type of the given activity.

5. The method of any one of claims 1 to 4, wherein estimating the capacity includes estimations of both non-stall time capacity at the given processor OPP and stall-time capacity at the given memory OPP; or
wherein estimating the dynamic power includes estimations of both non-stall time power at the given processor OPP and stall-time power at the given memory OPP.

6. The method of claim 1, wherein requesting the memory resources further comprises:
requesting a memory controller to set a memory device at a requested memory OPP, wherein the memory device is to be accessed by the target processor; or
requesting a memory controller one or both of: a requested range of memory bandwidth and a requested range of memory latency.

7. The method of claim 1, wherein estimating the load demand further comprises:
scaling a reference capacity of a processor executing the given task in a past time period by a factor that includes the scaled non-stall time and the scaled stall time.

8. A system (100) of heterogeneous multiprocessors (110) operative to perform task scheduling, comprising:
a plurality of processors; and
a plurality of memory devices coupled to the processors, wherein the processors are operative to:
collect activity indexes including per-task activity indexes of a plurality of tasks and per-processor activity indexes of the plurality of processors, wherein both the per-task activity indexes and the per-processor activity indexes include non-stall time of task execution and a corresponding processor operating point, OPP, and stall time of memory access and a corresponding memory OPP;
scale the non-stall time and the stall time based on at least the corresponding processor OPP and the corresponding memory OPP, respectively, to produce scaled non-stall time and scaled stall time at a given processor OPP and a given memory OPP, respectively;
use both the scaled non-stall time and the scaled stall time to estimate capacity and dynamic power of each processor when assigned a given task at the given processor OPP and the given memory OPP;
estimate a load demand of the given task; and
assign the given task to a target processor and request memory resources for executing the given task to satisfy power and performance criteria based on the activity indexes, the capacity, the dynamic power, and the load demand.

9. The system (100) of claim 8, wherein the per-processor activity indexes of a processor indicate, for each time period in a plurality of time periods, the non-stall time of executing one or more tasks and the corresponding processor OPP and the stall time of access to one or more of the memory devices and corresponding memory OPPs.

10. The system (100) of claim 8 or claim 9, wherein the per-task activity indexes of the given task indicate, for each time period in a plurality of time periods, the non-stall time of the given task executed on a processor and the corresponding processor OPP and the stall time of access to one or more of the memory devices and corresponding memory OPPs.

11. The system (100) of claim any one of claims 8 to 10, wherein both the per-task activity indexes and the per-processor activity indexes further include an instruction type of a given activity, and scaling the non-stall time and the stall time is further based on the instruction type of the given activity.

12. The system (100) of any one of claims 8 to 11, wherein estimating the capacity includes estimations of both non-stall time capacity at the given processor OPP and stall-time capacity at the given memory OPP.

13. The system (100) of any one of claims 8 to 12, wherein estimating the dynamic power includes estimations of both non-stall time power at the given processor OPP and stall-time power at the given memory OPP.

14. The system (100) of claim 8, wherein, when requesting the memory resources, the processors are further operative to:
request a memory controller to set a memory device at a requested memory OPP, wherein the memory device is to be accessed by the target processor; or
request a memory controller one or both of: a requested range of memory bandwidth and a requested range of memory latency.

15. The system (100) of claim 8, wherein, when estimating the load demand, the processors are further operative to:
scale a reference capacity of a processor executing the given task in a past time period by a factor that includes the scaled non-stall time and the scaled stall time.
